# EUROPEAN PATENT SPECIFICATION

(11) **EP 1 422 493 B1**
(45) Date of publication and mention of the grant of the patent: **30.06.2010**
(21) Application number: 02745929.6
(22) Date of filing: 10.07.2002
(51) Int. Cl.: G01B 7/28, G07D 5/08, G01N 27/72

(54) **DEVICE AND METHOD FOR IDENTIFYING METAL BODY**
EINRICHTUNG UND VERFAHREN ZUM IDENTIFIZIEREN EINES METALLKÖRPERS
DISPOSITIF ET PROCEDE PERMETTANT D'IDENTIFIER UN CORPS METALLIQUE

(30) Priority: 27.08.2001 JP 2001256549
(43) Date of publication of application: 26.05.2004
(73) Proprietor: Takamisawa Cybernetics Co., Ltd., Nakano-ku, Tokyo 164-0011 (JP)
(72) Inventor: MARUYAMA, Masuo, Takamisawa Cybernetics Co., Ltd., Nakano-ku, Tokyo 164-0011 (JP)
(74) Representative: Cross, Rupert Edward Blount
(86) International application number: PCT/JP2002/007015
(87) International publication number: WO 2003/019105

(56) References cited:
- GB-A- 2 253 298
- JP-A- 6 084 040
- JP-A- 62 022 194

## Description

### Technical Field

This invention relates to a metal object identification apparatus and metal object identification method for identifying metal objects, which in particular are used to identify coins.

### Background Art

In the past, metal object identification apparatuses to identify metal objects and in particular coins have been known; one such example is described in Japanese Patent Laid-open No. 6-84040, and the corresponding English language family member GB-A-2,253,298. The metal object identification apparatus described in the above publication has an oscillation circuit comprising a coil; when a coin (metal object) moves relative to the coil, the changes in impedance and inductance of the coil are detected as changes in the oscillation frequency and amplitude of the oscillation circuit, and the material of the coin is detected from this frequency change, while the outer shape and cross-sectional area of the coin are detected from the amplitude change.

### Disclosure of the Invention

However, among foreign coins there exist coins of ferrous metal with a copper plating, and there is scattering in the thickness of the copper plating. Due to this scattering in the copper film thickness, there are large changes in the conductivity, which is due in part to the plating thickness which is a material characteristic of the coin, so that overlaps occur between the parameter values of the coin to be identified and the parameter values of other coins and, and consequently there is the problem that coins cannot be identified correctly.

In the case of Japanese coins, the above-described scattering is comparatively small; however, there are cases in which it is difficult to discriminate true coins (authentic coins) from altered coins which have substantially the same external shape as a result of machining a foreign coin. In other words, in order to discriminate such altered coins from authentic coins, the range of parameters within which a coin is judged to be authentic must be made narrow, but then there is the problem that due to scattering that occurs because of difference in the state of conveyance, material, wear, the parameters of an authentic coin may not fall within this range of parameters, so that the rate of acceptance of authentic coins is reduced.

An objective of the present invention is to provide a metal object identification apparatus and metal object identification method which solves the above-described problems, and can identify a metal object even when there is scattering in the thickness of a metal surface film. A further objective is to provide a metal object identification apparatus and metal object identification method capable of discriminatingmetal objects even when the external shapes are substantially equal.

A metal object identification apparatus of this invention comprising an oscillation circuit incorporating a coil; an extraction portion which, when a metal object to be identified moves with respect to the coil, extracts the output from the oscillation circuit as at least two parameters; is characterized in that the apparatus further comprises: a correlation storage portion, which stores in advance correlations of parameters for the metal object based on measured results for a plurality of samples; and, a metal object identification portion, which identifies metal objects by judging whether the parameters extracted by the extraction portion are applicable to the correlation stored in the correlation storage portion.

The metal object identification apparatus of this invention stores the correlations of parameters for metal objects measured in advance, and judges whether at least two parameters output from the oscillation circuit are applicable to the stored correlation. By this means, even when overlap exists in the ranges in which parameters exist for different metal objects, so that it may not be possible to correctly identify metal objects when identifying metal obj ects using one parameter, metal obj ects can be identi fied using the correlation of a plurality of parameters. Here a "correlation" is a relation between parameters determined by the characteristics of a metal object. This correlation is determined based on the parameters of metal objects of the same type obtained from a plurality of samples.

The above-described metal object identification apparatus may be characterized in that the correlation storage portion stores in advance the correlations of the parameters for a plurality of types of metal objects, and the metal object identification portion identifies the type of metal object by judging which of the correlation stored in the correlation storage portion the parameters extracted by the extraction portion are applicable to.

In this way, if correlations for parameters are stored in advance in the correlation storage portion for a plurality of types of metal objects, the metal object type can be identified by the metal object identification portion. The above-described metal object identification apparatus may be characterized in that the parameters extracted by the extraction portion are a parameter relating to the change in oscillation amplitude and a parameter relating to the change in oscillation frequency; correlations for each of the metal objects between the change in oscillation amplitude and the change in oscillation frequency are stored in the correlation storage portion; and the metal object identification portion identifies the type of metal object by judging which of the correlation stored in the correlation storage portion the parameters extracted by the extraction portion are applicable to.

The parameter related to oscillation frequency changes is a parameter which depends on the conductivity of the metal obj ect, which changes mainly due to the material of the metal object; the parameter related to oscillation amplitude changes is a parameter which changes mainly depending on the cross-sectional area of the metal object. The inventors discovered that there is a correlation, unique to each metal object, between oscillation frequency changes and oscillation amplitude changes; utilizing this correlation, an apparatus for identification of metal objects having scattering in the thickness of a metal surface film was invented.

The above-described metal object identification apparatus may be characterized in that the correlation storage portion stores distributions of the change in oscillation frequency with respect to the change in oscillation amplitude, and the metal object identification portion identifies the type of metal object by judging which of the distribution for the metal object stored in the correlation storage portion the parameters extracted by the extraction portion are included in.

When oscillation frequency changes are plotted against oscillation amplitude changes,the range of the distribution of parameters is determined for each metal object type. Using this correlation, a metal object type can be identified by judging which of the distribution for the metal object stored in the correlation storage portion the parameters of a metal object to be identified are contained in. The above-described metal object identification apparatus may be characterized in that the correlation storage portion stores functions which are approximated to the change in oscillation frequency with respect to the change in oscillation amplitude for each of the metal objects, and the metal object identification portion identifies the type of metal object by judging which of the function for the metal object stored in the correlation storage portion the parameters extracted by the extraction portion exist in the vicinity of.

When oscillation frequency changes are plotted against oscillation amplitude changes, the oscillation frequency changes with respect to oscillation amplitude changes can be approximated by functions for each metal object type. Utilizing this correlation, metal object types can be identified by judging which of the stored correlation function for the metal obj ect the parameters of a metal obj ect to be identified are near. Whether parameters exist in the vicinity of a certain function can be judged, for example, by determining the distance in the y-axis direction of the parameters from the function, or the distance in the x-axis direction of parameters from the function and comparing the distance with a prescribed threshold value.

The above-described metal object identification apparatus may be characterized in further comprising correlation parameter calculation means which calculates the average rate of increase of the oscillation frequency with respect to the oscillation amplitude based on the functions stored in the correlation storage portion, and calculates, as a correlation parameter, the value of the oscillation frequency at a prescribed oscillation amplitude based on the calculated average rate of increase and on the parameters extracted by the extraction portion; wherein the metal object identification portion judges which of the function for the metal object stored in the correlation storage portion the parameters extracted by the extraction portion exist in the vicinity of, by judging which of the threshold values set in advance centered on the values of oscillation frequencies at the prescribed oscillation amplitude for each of the functions the correlation parameter calculated by the correlation parameter calculation means is contained within.

The inventors discovered that there are no large differences for metal objects in the rate of increase of oscillation frequency changes with respect to oscillation amplitude changes. Utilizing this property, correlation parameters representing correlations between extracted parameters are newly provided. That is, the functions passing through the point representing extracted parameters, and having the same rates of increase as the respective correlation average increase rates, are determined. Here "increase rate" includes negative increase rates, and cases in which the oscillation frequency decreases with increasing oscillation amplitude are also included in the scope of this invention. The values of oscillation frequencies at prescribed oscillation amplitudes for each calculated function are calculated as correlation parameters. Threshold values set in advance are then used to judge which of the oscillation frequency for the correlation function at the prescribed oscillation amplitude the calculated correlation parameters are close to, and a judgment is made as to which of the correlation function the extracted parameters exist in the vicinity of. By using correlation parameters in this way, it can be easily judged which of the function extracted parameters exist in the vicinity of. Threshold values set in advance are set such that there is no overlap in ranges.

In the above-described metal object identification apparatus, it is preferable that the metal objects be coins. The above-described metal object identification apparatus may be characterized in that the correlation storage portion stores a correlation between oscillation amplitude changes and oscillation frequency changes measured for a plurality of coins with the conductivity changed within the range of allowable conductivities for authentic coins; and the metal object identification portion judges the authenticity or inauthenticity of a coin based on the correlation stored in the correlation storage portion.

The inventors discovered that when the conductivity of the same coin, that is, of coins with equal outer shape, is changed, there exists a correlation between the oscillation frequency and the oscillation amplitude. By using this correlation metal objects can be identified based on slight differences in conductivity, and authentic coins can be accurately discriminated from forged coins with the same outer shape. A metal object identification method of this invention is characterized by the steps of claim 9.

In the correlation storage step of the metal object identification method of this invention, correlations between parameters for metal objects are stored in advance, and a judgment is made as to whether at least two parameters output from the oscillation circuit are applicable to the stored correlation. By this means, even when overlap exists in the ranges in which parameters exist for different metal obj ects, so that it may not be possible to correctly identify metal objects when identifying metal objects using one parameter, metal objects can be identified using the correlation of a plurality of parameters. Here a "correlation" is a relation between parameters determined by the characteristics of a metal object. This correlation is determined based on the parameters of metal objects of the same type obtained from a plurality of samples. The above-described metal object identification method may be characterized in that in the correlation storage step, correlations of the parameters are stored in advance for a plurality of types of metal objects; and, in the metal object identification step, the metal object type is identified by judging which of the correlation stored in the correlation storage portion the parameters extracted in the extraction step are applicable to.

Thus if in the correlation storage step correlations of parameters are stored in advance in the correlation storage portion for a plurality of types of metal objects, the metal object type can be identified by the metal object identification portion.

The above metal object identification method may be characterized in that the parameters extracted in the extraction step are a parameter relating to the change in oscillation amplitude and a parameter relating to the change in oscillation frequency; in the correlation storage step, correlations for each of the metal obj ects between the change in oscillation amplitude and the change in oscillation frequency are stored in the correlation storage portion; and in the metal object identification step, the metal object type is identified by judging which of the correlation stored in the correlation storage portion the parameters extracted in the extraction step are applicable to.

The parameter related to oscillation frequency changes is a parameter which depends on the conductivity of the metal obj ect, which changes mainly due to the material of the metal object; the parameter related to oscillation amplitude changes is a parameter which changes mainly depending on the cross-sectional area of the metal object. The inventors discovered that there is a correlation, unique to each metal object, between oscillation frequency changes and oscillation amplitude changes; utilizing this correlation, amethodof identification of metal objectshaving scattering in the thickness of a metal surface film was invented. The above-described metal object identification method may be characterized in that in said correlation storage step, the distributions of the oscillation frequency change with respect to the oscillation amplitude change are stored in said correlation storage portion; and in said metal object identification step, the metal object type is identified by judging which of the distribution for the metal object stored in said correlation storage portion the parameters extracted in said extraction step are included in.

When oscillation frequency changes are plotted against oscillation amplitude changes, the range of the distribution of parameters is determined for each metal object type. Using this correlation, a metal object type can be identified by judging which of the distribution of the correlation for the metal object stored in the correlation storage portion the parameters of a metal object to be identified are contained in.

The above-described metal object identification method may be characterized in that in the correlation storage step, functions which are approximated to the oscillation frequency change with respect to the oscillation amplitude change for each of the metal objects are stored in the correlation storage portion; and in the metal object identification step, the metal object type is identified by judging which of the function for the metal object stored in the correlation storage portion the parameters extracted in the extraction step exist in the vicinity of.

When oscillation frequency changes are plotted against oscillation amplitude changes, the oscillation frequency changes with respect to oscillation amplitude changes can be approximated by functions for each metal object type.

Utilizing this correlation, metal object types can be identified by judging which of the stored correlation function for the metal obj ect the parameters of a metal obj ect to be identified are near. Whether parameters exist in the vicinity of a certain function can be judged, for example, by determining the distance in the y-axis direction of the parameters from the function, or the distance in the x-axis direction of parameters from the function and comparing the distance with a prescribed threshold value.

The above-described metal object identification method may be characterized in further comprising a correlation parameter calculation step in which the average rate of increase of the oscillation frequency with respect to the oscillation amplitude is calculated based on the functions stored in the correlation storage portion, and the value of the oscillation frequency at a prescribed oscillation amplitude is calculated, as a correlation parameter, based on the calculated average rate of increase and the parameters extracted in the extraction step; and characterized in that: in the metal object identification step, a judgment is made as to which of the function for the metal object stored in the correlation storage portion the parameters extracted in the extraction step exist in the vicinity of, by judging which of the threshold values set in advance centered on the values of oscillation frequencies at the prescribed oscillation amplitude for each of the functions the correlation parameter calculated in the correlation parameter calculation step is contained within.

The inventors discovered that there are no large differences for metal objects in the rate of increase of oscillation frequency changes with respect to oscillation amplitude changes. Utilizing this property, correlation parameters representing correlations between extracted parameters are newly provided. That is, the functions passing through the point representing extracted parameters, and having the same rates of increase as the respective correlation average increase rates, are determined. Here "increase rate" includes negative increase rates, and cases in which the oscillation frequency decreases with increasing oscillation amplitude are also included in the scope of this invention. The values of oscillation frequencies at prescribed oscillation amplitudes for each calculated function are calculated as correlation parameters. Threshold values set in advance are then used to judge which of the oscillation frequency of the correlation at the prescribed oscillation amplitude the calculated correlation parameters are close to, and a judgment is made as to which of the correlation function the extracted parameters exist in the vicinity of. By using correlation parameters in this way, it can be easily judged which of the function the extracted parameters exist in the vicinity of. Threshold values set in advance are set such that there is no overlap in ranges.

In the above-described metal object identification method, it is preferable that the metal objects be coins.

The above-described metal object identification method may be characterized in that in the correlation storage step, the correlation between oscillation amplitude changes and oscillation frequency changes measured for a plurality of coins with the conductivity changed within the range of allowable conductivities for authentic coins is stored in the correlation storage portion; and in the metal object identification step, the authenticity or inauthenticity of a coin is judged based on the correlation stored in the correlation storage portion.

The inventors discovered that when the conductivity of the same coin, that is, of coins with equal outer shape, is changed, there exists a correlation between the oscillation frequency and the oscillation amplitude. By using this correlation metal objects can be identified based on slight differences in conductivity, and authentic coins can be accurately discriminated from forged coins with the same outer shape.

### Brief Description of the Drawings

Fig. 1 is a block diagram showing the configuration of a coin identification apparatus;
Fig. 2 is a perspective view which explains coin guiding means;
Fig. 3A is a drawing showing the manner in which a coin passes through a coil;
Fig. 3B is a drawing showing a signal S1 generated by the oscillation circuit 20;
Fig. 3C is a drawing showing a signal SL output from an output terminal;
Fig. 3D is a drawing showing a signal Df output from an output terminal;
Fig. 4A is a graph of the distribution of a first parameter for coin A and coin B;
Fig. 4B is a graph of the distribution of a second parameter for coin A and coin B;
Fig. 4C plots the values of the second parameter against the first parameter;
Fig. 5 is a graph showing the allowable ranges of correlation parameters for identification of each coin type;
Fig. 6 is a flowchart showing the operation of a coin identification apparatus;
Fig. 7A is a graph of the distribution of a first parameter for coins the conductivity of which are slightly different;
Fig. 7B is a graph of the distribution of a second parameter for coins the conductivity of which are slightly different;
Fig. 7C is a graph showing the correlations of the first parameter and second parameter; and,
Fig. 7D is a graph showing allowable ranges of correlation parameters for identification.

### Best Modes for Carrying Out the Invention

Below, preferred aspects of a metal object identification apparatus of this invention are explained in detail, together with the drawings. In the aspects explained below, the example of a coin identification apparatus which identifies coins (metal objects) is explained. In explanations of the drawings, the same elements are assigned the same symbols, and redundant explanations are omitted.

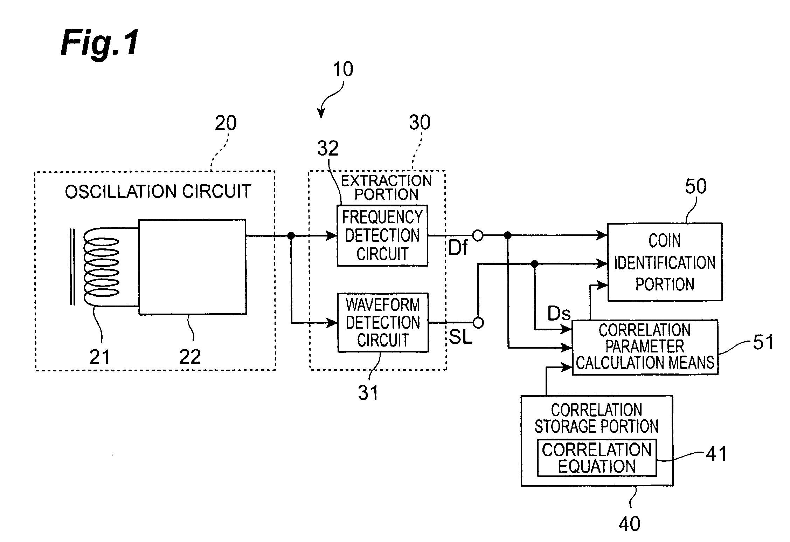

Fig. 1 is a block diagram showing the configuration of a coin identification apparatus 10 of this aspect. The coin identification apparatus 10 has an oscillation circuit 20, comprising a coil 21; an extraction portion 30 which extracts two parameters from the output of the oscillation circuit 20; a correlation storage portion 40 which stores, for each coin, the correlation between the parameters based on measurement results for parameters measured in advance; and a coin identification portion 50, which identifies the type of coin based on the parameters extracted by the extraction portion 30, referring to the correlation storage portion 40. The coin identification apparatus 10 further has correlation parameter calculation means 51 which calculates correlation parameters based on two parameters extracted for each coin to be identified (hereinafter called a "coin for identification").

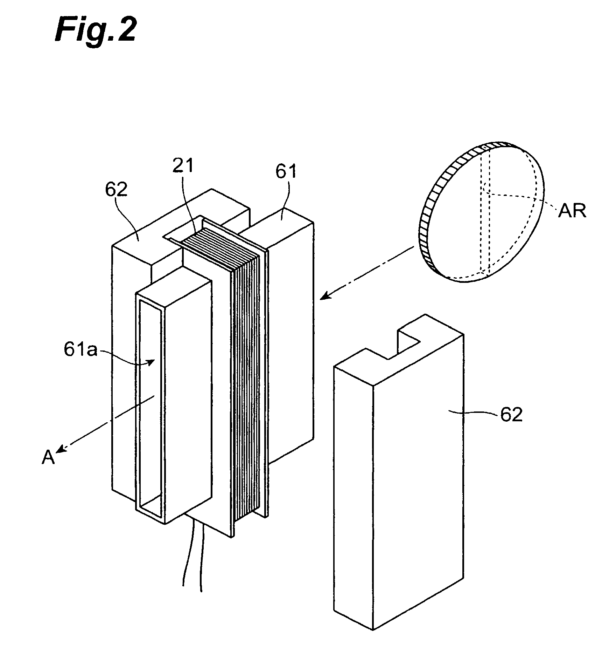

In addition to the coil 21, the oscillation circuit 20 has a circuit 22 comprising a capacitor, resistor, and similar. The coin identification apparatus 10 may also have coin guiding means, which guides the trajectory of the coin for identification so that the coin for identification passes through inside the coil 21. One example of coin guiding means is explained, referring to Fig. 2. The coin guiding means 61 shown in Fig. 2 has a hollow portion 61a through which the coin passes, and is a cylindrical body molded from plastic or similar. The coin guiding means 61 may have a pair of flanges 62 on the outside of the cylinder body, formed integrally and substantially parallel, separated by a prescribed interval. The coil 21 is formed by winding comparatively thin insulated copper wire around the outer walls of the cylinder body, with both ends of the copper wire extending outside. The shape of the hollow portion 61a is designed so as to be similar to, but somewhat larger than, the cross-section AR (the shaded lines in Fig. 2) in the radial direction of the coin for identification. Returning to Fig. 1, the extraction portion 30 comprises a frequency detection circuit 32 connected to the oscillation circuit 20 and a waveform detection circuit 31, and extracts the output from the oscillation circuit 20 as two parameters. The waveform detection circuit 31 extracts as a parameter (hereinafter called the "first parameter") the change in oscillation amplitude when a coin moves relative to the coil 21, and the frequency detection circuit 32 extracts as a parameter (hereinafter called the "second parameter") the change in frequency when a coin moves relative to the coil 21.

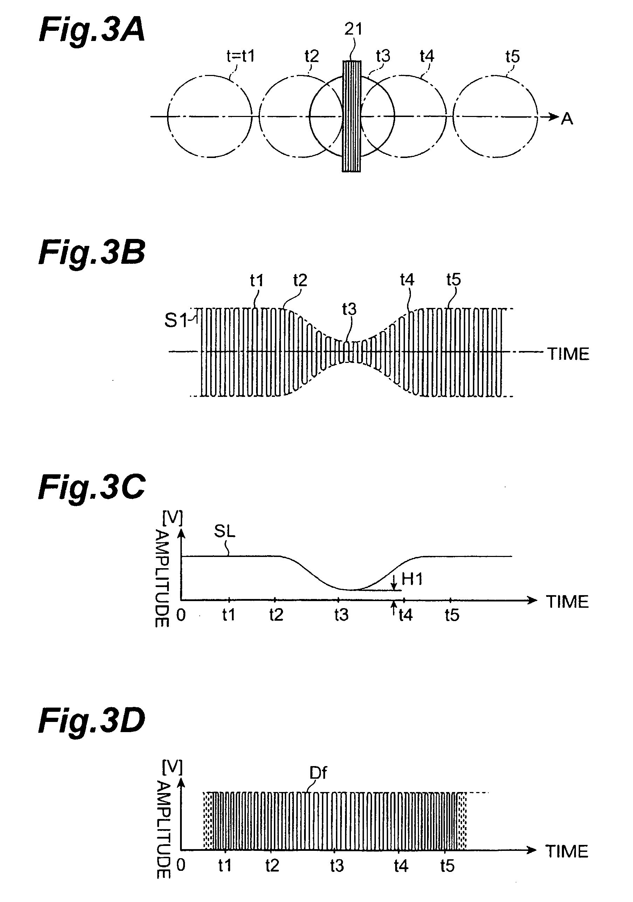

The first parameter is obtained by detecting the envelope of the signal appearing at the terminal, and extracting as a parameter the change in amplitude of the envelope of the signal. The second parameter is extracted in the following manner. First the oscillation frequency of the signal appearing at the terminal is detected, and the period, which is the reciprocal of the oscillation frequency, is measured using a CPU counter or other rapid signal. The maximum value is then extracted as the parameter. Here the measured maximum value is taken to be the second parameter, but the minimum value may be used instead of the second parameter. The signal appearing at the terminal and the relation of the parameters are explained referring to Fig. 3A through Fig. 3D. Figs. 3A to 3D show that the signal S1 appearing in the oscillation circuit 20 (Fig. 3B), the signal SL appearing at the output terminal (Fig. 3C), and the signal Df appearing at the output terminal (Fig. 3D) change when, as shown in Fig. 3A, a coin passes along the arrow A through the hollow center of the coil 21 in the coin identification apparatus 10.

When the coin is distant from the coil 21, such as at times prior to time t1, there is no effect of lines of magnetic force, and in this state there is no change in the inductance or impedance of the coil 21, and a signal S1 with constant frequency and amplitude is generated. Hence the signal SL output from the waveform detection circuit 31 remains fixed amplitude, and similarly, the output signal of the frequency detection circuit 32 also appears as a rectangular signal of fixed frequency.

Then when, as shown at time t2, the leading portion of the coin enters the hollow portion 61a of the coil 21, an eddy current is generated in the leading portion by the effect of the lines of magnetic force, and simultaneously the inductance and impedance of the coil 21 change, and the frequency and amplitude of the signal change. In particular, the change in frequency is affected by the conductivity of the metal object, and the amplitude is affected by the cross-sectional area of the overlapping portion of the leading portion of the coin with the coil 21.

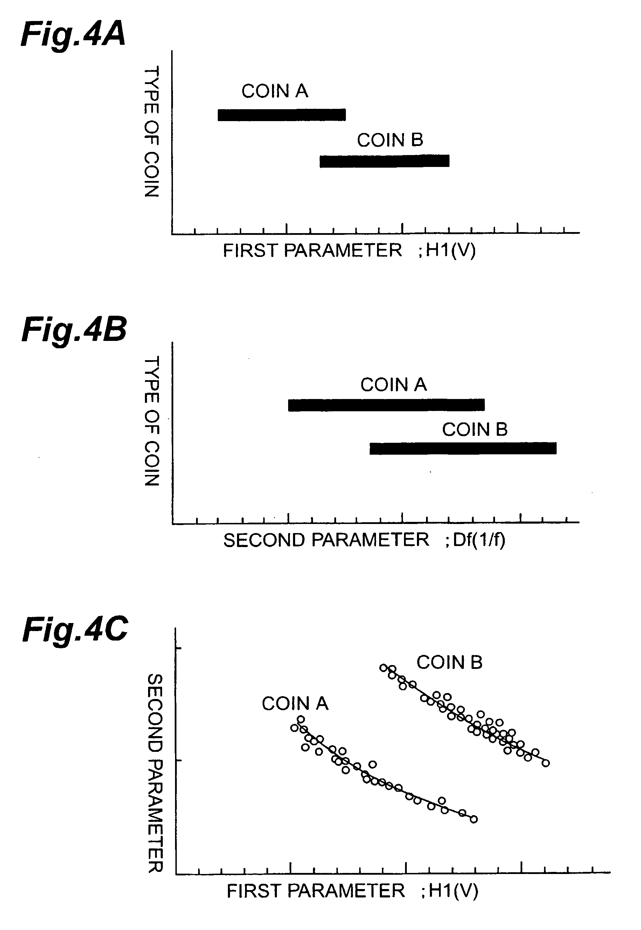

When the coin proceeds into the hollow portion 61a, the eddy current generation gradually increases. Theamplitude of the output signal decreases in accordance with this change in the signal, and the output signal frequency also changes. And when as shown from time t3 to time t5 the coin moves away from the coil 21, the signal frequency and amplitude both gradually return to their original values, and when the coin has moved completely away from the coil 21, the signal is restored to the original frequency and amplitude (for example, the frequency and amplitude at time t1). The correlation storage portion 40 stores, as a correlation equation 41, the correlation between the above-described parameters for each coin, based on the results of measurements made in advance of a plurality of samples of each coin type. Here, the correlation equation 41 is explained referring to Fig. 4A through Fig. 4C. Fig. 4A is a graph of the distribution of the first parameter for a coin A and coin B; Fig. 4B is a graph of the distribution of the second parameter for coin A and coin B; and, Fig. 4C plots the values of the second parameter against the first parameter, and shows the correlation between the first parameter and the second parameter. The correlation equation 41 is an equation which is derived based on the graph shown in Fig. 4C; a first-order equation is approximated to the distributions of the parameters to determine the correlation equation 41. Here the correlation equation 41 is determined by approximating the first order equation to the parameter distribution; but an approximation using a polynomial equation of second or higher order may be used.

The coin identification portion 50 has a function for identifying the type of coin based on the two parameters extracted by the extraction portion 30 and correlations stored in the correlation storage portion 40. Here the correlation parameter calculation means 51, which supports the identification of a coin by the coin identification portion 50 based on correlation equations 41 stored in the correlation storage portion 40, is explained.

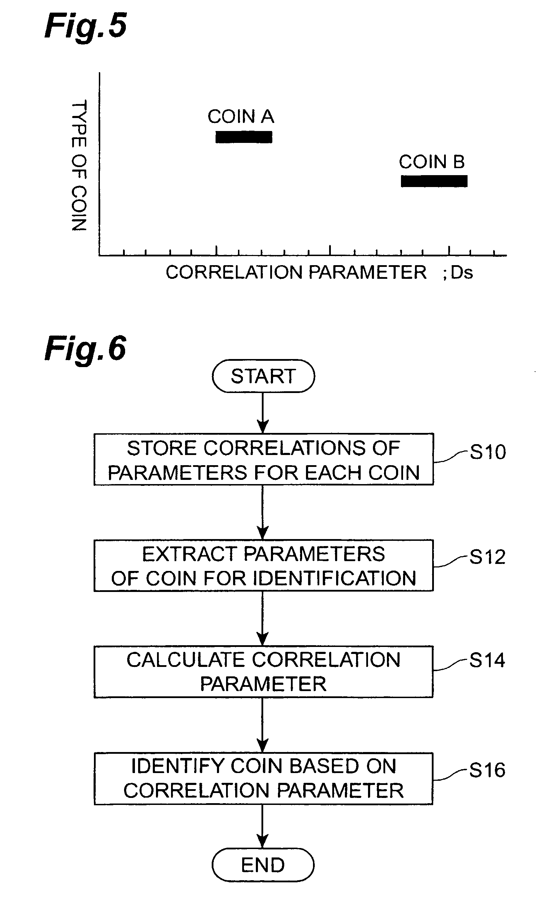

The correlationparameter calculationmeans 51 has a function for determining correlation parameters from the first parameter and second parameter, in order to judge whether the parameters of the coin for identification are applicable to any of the correlations stored in the correlation storage portion 40. The correlation parameter calculation means 51 utilizes the fact that the correlations of the parameters for each coin have substantially the same slope (the rate of increase of the second parameter with respect to the first parameter is substantially the same), as shown in Fig. 4C, to calculate correlation parameters. Specifically, first the average slope of the correlation equation is calculated from each of the correlation equations. This average slope is a slope which represents each of the correlation equations. Then, from the parameters for the coin for identification and the average slope, the first-order equation which passes through the parameters of the coin for identification and has the average slope is determined, and the intercept of the first-order equation with the second parameter axis is calculated as a correlation parameter. The correlation parameter calculation means 51 also sets the allowable identification range of correlation parameters in order to judge the type of each coin. Specifically, the intercepts with the second parameter axis of the correlation equations for each coin are calculated, and prescribed ranges centered on these values are set as the allowable identification ranges. As shown in Fig. 5, the allowable identification ranges for each coin are set such that there is no overlap among coins, so that accurate identification of each coin type is possible. Here the correlation parameter calculation means 51 which calculates correlation parameters exists separately from the coin identification portion 50; however, the coin identification portion 50 may be provided with a function for calculating correlation parameters.

The coin identification portion 50 has a function for identifying a coin by judging whether a correlation parameter calculated by the correlation parameter calculation means 51 is contained within the correlation parameter range for any coin type. In this aspect, the correlation parameter calculation means 51 calculates the correlation parameter and the coin identification portion 50 judges whether the parameter of the coin for identification is included within the parameter range for any coin type; however, the coin identification portion 50 may identify a coin using another method such as, for example, calculating the distance between the parameter of the coin for identification and a correlation equation 41.

Next, the operation of the coin identification apparatus 10 of this aspect is explained, and in addition a coin (metal object) identification method of this invention is explained. Fig. 6 is a flowchart showing the operation of the coin identification apparatus 10.

First, the correlation storage portion 40 of the coin identification apparatus 10 is made to store correlations of the first parameter and second parameter for each coin type (S10) . Measurements of the first parameter and second parameter are performed for each coin type, and numerous samples are acquired. Based on these samples, the correlation between the first parameter and the second parameter is calculated as a first-order correlation equation 41, and is stored in the correlation storage portion 40. This step is in preparation to register information for each coin type in the coin identification apparatus 10 in order to perform coin identification. Also, in this step the ranges of correlation parameters to discriminate different coin types are set. Specifically, the second parameter axis intercept value of each correlation equation 41 is calculated, and the allowable identification range is set with a prescribed width and including the intercept value.

Next, the coin for identification is made to pass through the hollow portion of the coil 21, and the first parameter and second parameter are extracted from the change in oscillation amplitude and the change in oscillation frequency (S12).

Next, the correlation parameter calculation means 51 calculates the correlation parameter based on the extracted first parameter and second parameter (S14). Specifically, first the average slope of the correlation equation 41 for each coin type is calculated. Then, a first-order equation which passes through the point determined by the first parameter and the second parameter, and which has the average slope, is calculated. Then the intercept with the second parameter axis of this first-order equation is calculated as the correlation parameter.

Next, the coin type is identified by judging which allowable identification range of a coin type the correlation parameter is contained within (S16).

In the coin identification apparatus 10 of this aspect, the oscillation amplitude change and the oscillation frequency change occurring in the oscillation circuit 20 when a coin passes through the coil 21 are extracted as the first parameter and the second parameter respectively, and by identifying the coin based on the correlation between these parameters, accurate coin identification can be performed. Referring to Fig. 4A and Fig. 4B, individually, the first parameter and the second parameter overlap in the ranges of parameters of coins, but by identifying the coin using the correlation of the two parameters, such inconvenience can be avoided (cf. Fig. 5).

Further, the coin identification apparatus 10 of this aspect has correlation parameter calculation means 51, and the correlation parameter is calculated based on the first parameter and the second parameter, so that the coin identification portion 50 can easily judge, from the correlation parameter, which correlation equation 41 two parameters of the coin for identification exist in the vicinity of.

The coin identification method of this aspect can, similarly to the above-described coin identification apparatus 10, accurately identify coins based on the correlation of two parameters.

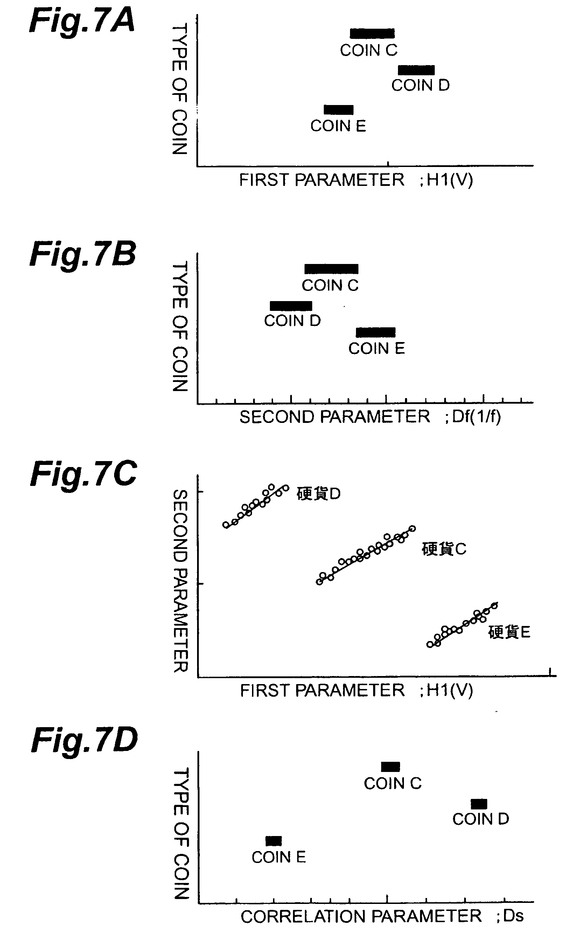

Next, a second aspect of this invention is explained. The coin identification apparatus of the second aspect has a configuration which is essentially the same as the coin identification apparatus 10 of the first aspect, but the data stored in the correlation storage portion is different. The data stored in the correlation storage portion of the coin identification apparatus of the second aspect is the correlation of two parameters based on the results of measurements performed while varying the conductivity within the range of conductivities allowable for a coin to be judged as an authentic coin of one type. The conductivity of a coin changes depending on the character of the coin material, but while forged coins obtained by altering foreign coins, for example, have different conductivities, it is sometimes difficult to make a judgement based only on differences in conductivity. Fig. 7A is a graph of the distribution of the first parameter, Fig. 7B is a graph of the distribution of the second parameter, Fig. 7C is a graph of the correlation, and Fig. 7D shows allowable ranges of correlation parameters for identification, each for coins the conductivity of which is changed slightly. As shown in Fig. 7A and Fig. 7B, there is a portion of overlap between the distributions of the first parameter and the second parameter, and these parameters independently cannot be used to accurately judge the authenticity of a coin. As shown in Fig. 7C, from the correlation between the first parameter and the secondparameter it is seen that there is a correlation different from that of the coin identification apparatus of the first aspect. Using this correlation, authentic and inauthentic coins can be discriminated. In Fig. 7A through Fig. 7D, data for a coin C and coin E with different conductivities is shown as examples for comparison in addition to coin D which is an authentic coin; however, the correlation data stored in the correlation storage portion of the coin identification apparatus of the second aspect is data for the range of correlation parameter to identify coin D as an authentic coin.

The operation of the coin identification apparatus of the second aspect is in essence the same as the operation of the coin identification apparatus of the first aspect. The coin identification apparatus of the second aspect stores correlations of parameters measured for coins with the same outer shape but slightly different conductivities in the correlation storage portion, and identifies coins (in particular authentic and inauthentic coins) based on these correlations. By thus storing correlations for coins with the same outer shape, changes in correlation accompanying changes in the conductivity of coins can be handled more precisely, and new correlations can be ascertained. As a result, authentic and inauthentic coins with slight differences in material can be accurately discriminated. In the above, aspects of this invention have been explained, but the present invention is not limited to the above-described aspects.

In the above aspects, examples of a coin identification apparatus were explained; but configuration as a metal object identification apparatus which identifies metal objects other than coins is possible.

In the above aspects, by using correlation equations, a judgment was made as to whether the parameters of the coin to be identified exist in the vicinity of the correlation equations for any of the coin types; however, correlation equations need not be used, and judgments may be made as to whether parameters of a coin to be identified are contained in a distribution of correlations of coins measured in advance.

In the above aspects, changes in the oscillation amplitude and oscillation frequency occurring in an oscillation circuit when a coin moves relative to a coil were extracted as a first parameter and a second parameter respectively; however, other elements may be used as parameters instead. For example, the diameters of coins can be measured and used as one parameter.

### Industrial Applicability

In this invention, by storing correlations of parameters for a plurality of metal objects measured in advance, and judging whether at least two parameters output from an oscillation circuit are applicable to any of the stored correlations, type of the metal object can be identified from the correlation of a plurality of parameters, even if where identifying the metal object using a single parameter is difficult for the reason that the overlap occurs in the ranges of existence of the parameter for different metal objects, and the metal object cannot be accurately identified.

## Claims

1. A metal object identification apparatus (10), comprising:
an oscillation circuit (20) comprising a coil (21);
an extraction portion (30) which, when a metal object to be identified moves with respect to said coil, extracts the output from said oscillation circuit as at least two parameters;
**characterised in that** the apparatus further comprises:
a correlation storage portion (40) which, based on the measured results for a plurality of samples, stores in advance a correlation of said parameters for the metal object; and
a metal object identification portion (50), which identifies the metal object by judging whether the parameters extracted by said extraction portion are applicable to the correlation stored in said correlation storage portion.

2. The metal object identification apparatus (10) according to Claim 1, **characterized in that** said correlation storage portion (40) stores in advance the correlations of said parameters for a plurality of types of metal objects, and said metal object identification portion (50) identifies the type of metal object by judging which of the correlation stored in said correlation storage portion the parameters extracted by said extraction portion (30) are applicable to.

3. The metal object identification apparatus (10) according to Claim 2, **characterized in that** the parameters extracted by said extraction portion (30) are a parameter relating to the change in oscillation amplitude and a parameter relating to the change in oscillation frequency;
correlations for each of the metal objects between the change in oscillation amplitude and the change in oscillation frequency are stored in said correlation storage portion (40); and
said metal object identification portion (50) identifies the type of metal object by judging which of the correlation stored in said correlation storage portion the parameters extracted by said extraction portion are applicable to.

4. The metal object identification apparatus (10) according to Claim 3, **characterized in that** said correlation storage portion (40) stores distributions of the change in oscillation frequency with respect to the change in oscillation amplitude; and
said metal object identification portion (50) identifies the type of metal object by judging which of the distribution for the metal object stored in said correlation storage portion the parameters extracted by said extraction portion are included in.

5. The metal object identification apparatus (10) according to Claim 3, **characterized in that** said correlation storage portion (40) stores functions which are approximated to the change in oscillation frequency with respect to the change in oscillation amplitude for each of the metal objects, and said metal object identification portion (50) identifies the type of metal object by judging which of the function for the metal object stored in said correlation storage portion the parameters extracted by said extraction portion (30) exist in the vicinity of.

6. The metal object identification apparatus (10) according to Claim 5, further comprising correlation parameter calculation means (51) which calculates the average rate of increase of the oscillation frequency with respect to the oscillation amplitude based on the functions stored in said correlation storage portion (40), and calculates, as a correlation parameter, the value of the oscillation frequency at a prescribed oscillation amplitude based on said calculated average rate of increase and on the parameters extracted by said extraction portion (30);
wherein said metal object identification portion judges which of the function for the metal object stored in said correlation storage portion the parameters extracted by said extraction portion exist in the vicinity of, by judging which of the threshold values set in advance centered on the values of oscillation frequencies at said prescribed oscillation amplitude for each of said functions the correlation parameter calculated by said correlation parameter calculation means is contained within.

7. The metal object identification apparatuses (10) according to any of Claims 1 through 6, **characterized in that** said metal objects are coins.

8. The metal object identification apparatus (10) according to Claim 7, **characterized in that** said correlation storage portion (40) stores a correlation between oscillation amplitude changes and oscillation frequency changes measured for a plurality of coins with the conductivity changed within the range of allowable conductivities for authentic coins; and
said metal object identification portion judges the authenticity or inauthenticity of a coin based on the correlation stored in said correlation storage portion.

9. A metal object identification method, comprising:
an extraction step, in which, when a metal object to be identified moves with respect to a coil (21) constituting a part of an oscillation circuit (20), the output from said oscillation circuit is extracted as at least two parameters;
**characterised in that** the method further comprises a correlation storage step, in which a correlation between parameters for a metal object is stored in advance in a correlation storage portion (40), based on measured results for a plurality of samples; and
a metal object identification step, in which the metal object is identified by judging whether the parameters extracted in said extraction step are applicable to the correlation stored in said correlation storage portion.

10. The metal object identification method according to Claim 9, **characterized in that**, in said correlation storage step, correlations of said parameters are stored in advance for a plurality of types of metal objects; and, in said metal object identification step, the metal object type is identified by judging which of the correlation stored in said correlation storage portion (40) the parameters extracted in said extraction step are applicable to.

11. The metal object identification method according to Claim 10, **characterized in that** the parameters extracted in said extraction step are a parameter relating to the change in oscillation amplitude and a parameter relating to the change in oscillation frequency;
in said correlation storage step, correlations for each of the metal objects between the change in oscillation amplitude and the change in oscillation frequency are stored in said correlation storage portion; and
in said metal object identification step, the metal object type is identified by judging which of the correlation stored in said correlation storage portion the parameters extracted in said extraction step are applicable to.

12. The metal object identification method according to Claim 11, **characterized in that**:
in said correlation storage step, the distributions of the oscillation frequency change with respect to the oscillation amplitude change are stored in said correlation storage portion; and
in said metal object identification step, the metal object type is identified by judging which of the distribution for the metal object stored in said correlation storage portion (40) the parameters extracted in said extraction step are included in.

13. The metal object identification method according to Claim 11, **characterized in that**:
in said correlation storage step, functions which are approximated to the oscillation frequency change with respect to the oscillation amplitude change for each of the metal objects are stored in said correlation storage portion (40); and
in said metal object identification step, the metal object type is identified by judging which of the function for the metal object stored in said correlation storage portion the parameters extracted in said extraction step exist in the vicinity of.

14. The metal object identification method according to Claim 13, further comprising a correlation parameter calculation step in which the average rate of increase of the oscillation frequency with respect to the oscillation amplitude is calculated based on the functions stored in said correlation storage portion (40), and the value of the oscillation frequency at a prescribed oscillation amplitude is calculated, as a correlation parameter, based on said calculated average rate of increase and the parameters extracted in said extraction step; and **characterized in that**:
in said metal object identification step, a judgment is made as to which of the function for the metal object stored in said correlation storage portion the parameters extracted in said extraction step exist in the vicinity of, by judging which of the threshold values set in advance centered on the values of oscillation frequencies at said prescribed oscillation amplitude for each of said functions the correlation parameter calculated in said correlation parameter calculation step is contained within.

15. The metal object identification method according to any of Claims 9 through 14, **characterized in that** said metal objects are coins.

16. The metal object identification method according to Claim 15, **characterized in that**, in said correlation storage step, the correlation between oscillation amplitude changes and oscillation frequency changes measured for a plurality of coins with the conductivity changed within the range of allowable conductivities for authentic coins is stored in said correlation storage portion (40); and
in said metal object identification step, the authenticity or inauthenticity of a coin is judgedbased on the correlation stored in said correlation storage portion.

## Patentansprüche

1. Metallobjekt-Identifizierungsvorrichtung (10), umfassend:
eine Oszillationsschaltung (20), die eine Spule (21) umfasst;
einen Extraktionsteil (30), der dann, wenn sich ein zu identifizierendes Metallobjekt bezüglich der Spule bewegt, das Ausgangssignal von der Oszillationsschaltung in Form von wenigstens zwei Parametern extrahiert;
**dadurch gekennzeichnet, dass** die Vorrichtung ferner umfasst:
einen Korrelationsspeicherteil (40), der auf der Grundlage der gemessenen Ergebnisse einer Vielzahl von Proben im Voraus eine Korrelation der Parameter für das Metallobjekt speichert; und
einen Metallobjekt-Identifizierungsteil (50), der das Metallobjekt identifiziert, indem er beurteilt, ob die vom Extraktionsteil extrahierten Parameter zu der im Korrelationsspeicherteil gespeicherten Korrelation passen.

2. Metallobjekt-Identifizierungsvorrichtung (10) nach Anspruch 1, **dadurch gekennzeichnet, dass** der Korrelationsspeicherteil (40) im Voraus die Korrelationen der Parameter für eine Vielzahl von Typen von Metallobjekten speichert, wobei der Metallobjekt-Identifizierungsteil (50) den Typ des Metallobjekts identifiziert, indem er beurteilt, zu welcher der im Korrelationsspeicherteil gespeicherten Korrelationen die vom Extraktionsteil (30) extrahierten Parameter passen.

3. Metallobjekt-Identifizierungsvorrichtung (10) nach Anspruch 2, **dadurch gekennzeichnet, dass** die vom Extraktionsteil (30) extrahierten Parameter ein Parameter, der sich auf die Änderung der Oszillationsamplitude bezieht, und ein Parameter, der sich auf die Änderung der Oszillationsfrequenz bezieht, sind;
für jedes der Metallobjekte Korrelationen zwischen der Änderung der Oszillationsamplitude und der Änderung der Oszillationsfrequenz in dem Korrelationsspeicherabschnitt (40) gespeichert sind; und
der Metallobjekt-Identifizierungsteil (50) den Typ des Metallobjekts identifiziert, indem er beurteilt, zu welcher der im Korrelationsspeicherteil gespeicherten Korrelationen die vom Extraktionsteil extrahierten Parameter passen.

4. Metallobjekt-Identifizierungsvorrichtung (10) nach Anspruch 3, **dadurch gekennzeichnet, dass** der Korrelationsspeicherteil (40) Verteilungen der Änderung der Oszillationsfrequenz bezüglich der Änderung der Oszillationsamplitude speichert; und
der Metallobjekt-Identifizierungsteil (50) den Typ des Metallobjekts identifiziert, indem er beurteilt, in welcher der im Korrelationsspeicherteil gespeicherten Verteilungen für das Metallobjekt die vom Extraktionsteil extrahierten Parameter enthalten sind.

5. Metallobjekt-Identifizierungsvorrichtung (10) nach Anspruch 3, **dadurch gekennzeichnet, dass** der Korrelationsspeicherteil (40) Funktionen speichert, die der Änderung der Oszillationsfrequenz in Bezug auf die Änderung der Oszillationsamplitude für jedes der Metallobjekte genähert sind, wobei der Metallobjekt-Identifizierungsteil (50) den Typ des Metallobjekts identifiziert, indem er beurteilt, für welche der im Korrelationsspeicherteil gespeicherten Funktionen für das Metallobjekt die vom Extraktionsteil (30) extrahierten Parameter in der Umgebung liegen.

6. Metallobjekt-Identifizierungsvorrichtung (10) nach Anspruch 5, die ferner Korrelationsparameter-Berechnungsmittel (51) umfasst, die die durchschnittliche Steigerungsrate der Oszillationsfrequenz in Bezug auf die Oszillationsamplitude auf der Grundlage der im Korrelationsspeicherteil (40) gespeicherten Funktionen berechnet, und als einen Korrelationsparameter den Wert der Oszillationsfrequenz bei einer vorgeschriebenen Oszillationsamplitude auf der Grundlage der berechneten durchschnittlichen Steigerungsrate und auf der Grundlage der vom Extraktionsteil (30) extrahierten Parameter berechnet;
wobei der Metallobjekt-Identifizierungsteil beurteilt, für welche der im Korrelationsspeicherteil gespeicherten Funktionen für das Metallobjekt die vom Extraktionsteil extrahierten Parameter in der Umgebung liegen, indem er beurteilt, in welchen Schwellenwerten, die im Voraus zentriert auf den Werten der Oszillationsfrequenzen bei der vorgeschriebenen Oszillationsamplitude für jede der Funktionen gesetzt worden sind, die von den Korrelationsparameterberechnungsmitteln berechneten Korrelationsparameter enthalten sind.

7. Metallobjekt-Identifizierungsvorrichtung (10) nach irgendeinem der Ansprüche 1 bis 6, **dadurch gekennzeichnet, dass** die Metallobjekte Münzen sind.

8. Metallobjekt-Identifizierungsvorrichtung (10) nach Anspruch 7, **dadurch gekennzeichnet, dass** der Korrelationsspeicherteil (40) eine Korrelation zwischen Oszillationsamplitudenänderungen und Oszillationsfrequenzänderungen speichert, die für eine Vielzahl von Münzen gemessen worden sind, wobei die Leitfähigkeit sich innerhalb des Bereiches zulässiger Leitfähigkeiten für authentische Münzen ändert; und
der Metallobjekt-Identifizierungsteil die Authentizität oder Nicht-Authentizität einer Münze auf der Grundlage der im Korrelationsspeicherteil gespeicherten Korrelation beurteilt.

9. Metallobjekt-Identifizierungsverfahren, umfassend:
einen Extraktionsschritt, in dem dann, wenn sich ein zu identifizierendes Metallobjekt bezüglich einer Spule (21) bewegt, die einen Teil einer Oszillationsschaltung (20) bildet, das Ausgangssignal von der Oszillationsschaltung in Form wenigstens zweier Parameter extrahiert wird;
**dadurch gekennzeichnet, dass** das Verfahren ferner einen Korrelationsspeicherschritt umfasst, in welchem eine Korrelation zwischen Parametern für ein Metallobjekt im Voraus in einem Korrelationsspeicherteil (40) auf der Grundlage gemessener Ergebnisse für eine Vielzahl von Proben gespeichert werden; und
einen Metallobjekt-Identifizierungsschritt, in welchem das Metallobjekt identifiziert wird, indem beurteilt wird, ob die im Extraktionsschritt extrahierten Parameter zu der im Korrelationsspeicherteil gespeicherte Korrelation passen.

10. Metallobjekt-Identifizierungsverfahren nach Anspruch 9, **dadurch gekennzeichnet, dass** im Korrelationsspeicherschritt Korrelationen von Parametern im Voraus für eine Vielzahl von Typen von Metallobjekten gespeichert werden; und im Metallobjekt-Identifizierungsschritt der Metallobjekttyp identifiziert wird, indem beurteilt wird, zu welcher der im Korrelationsspeicherteil (40) gespeicherten Korrelationen die im Extraktionsschritt extrahierten Parameter passen.

11. Metallobjekt-Identifizierungsverfahren nach Anspruch 10, **dadurch gekennzeichnet, dass** die im Extraktionsschritt extrahierten Parameter ein Parameter, der sich auf die Änderung der Oszillationsamplitude bezieht, und ein Parameter, der sich auf die Änderung der Oszillationsfrequenz bezieht, sind;
im Korrelationsspeicherschritt für jedes der Metallobjekte Korrelationen zwischen der Änderung der Oszillationsamplitude und der Änderung der Oszillationsfrequenz im Korrelationsspeicherteil gespeichert werden; und
im Metallobjekt-Identifizierungsschritt der Metallobjekttyp identifiziert wird, indem beurteilt wird, zu welcher der im Korrelationsspeicherteil gespeicherten Korrelationen die im Extraktionsschritt extrahierten Parameter passen.

12. Metallobjekt-Identifizierungsverfahren nach Anspruch 11, **dadurch gekennzeichnet, dass**:
im Korrelationsspeicherschritt die Verteilungen der Oszillationsfrequenzänderung bezüglich der Oszillationsamplitudenänderung im Korrelationsspeicherteil gespeichert werden; und
im Metallobjekt-Identifizierungsschritt der Metallobjekttyp identifiziert wird, indem beurteilt wird, in welcher der im Korrelationsspeicherteil (40) gespeicherten Verteilungen für das Metallobjekt die im Extraktionsschritt extrahierten Parameter enthalten sind.

13. Metallobjekt-Identifizierungsverfahren nach Anspruch 11, **dadurch gekennzeichnet, dass**:
im Korrelationsspeicherschritt Funktionen, die der Oszillationsfrequenzänderung in Bezug auf die Oszillationsamplitudenänderung für jedes der Metallobjekte genähert sind, im Korrelationsspeicherteil (40) gespeichert werden; und
im Metallobjekt-Identifizierungsschritt der Metallobjekttyp identifiziert wird, indem beurteilt wird, für welche der im Korrelationsspeicherteil gespeicherten Funktionen für das Metallobjekt die im Extraktionsschritt extrahierten Parameter in der Umgebung liegen.

14. Metallobjekt-Identifizierungsverfahren nach Anspruch 13, ferner einen Korrelationsparameter-Berechnungsschritt umfassend, in welchem die durchschnittliche Steigerungsrate der Oszillationsfrequenz in Bezug auf die Oszillationsamplitude auf der Grundlage der im Korrelationsspeicherteil (40) gespeicherten Funktionen berechnet wird, wobei der Wert der Oszillationsfrequenz bei einer vorgeschriebenen Oszillationsamplitude als ein Korrelationsparameter auf der Grundlage der berechneten durchschnittlichen Steigerungsrate und der im Extraktionsschritt extrahierten Parameter berechnet wird; und **dadurch gekennzeichnet, dass**:
im Metallobjekt-Identifizierungsschritt beurteilt wird, für welche der im Korrelationsspeicherteil gespeicherten Funktionen für das Metallobjekt die im Extraktionsschritt extrahierten Parameter in der Umgebung liegen, indem beurteilt wird, in welchen der Schwellenwerte, die im Voraus zentriert auf den Werten der Oszillationsfrequenzen bei der vorgeschriebenen Oszillationsamplitude für jede der Funktionen gesetzt worden sind, der im Korrelationsparameterberechnungsschritt berechnete Korrelationsparameter enthalten ist.

15. Metallobjekt-Identifizierungsverfahren nach irgendeinem der Ansprüche 9 bis 14, **dadurch gekennzeichnet, dass** die Metallobjekte Münzen sind.

16. Metallobjekt-Identifizierungsverfahren nach Anspruch 15, **dadurch gekennzeichnet, dass** im Korrelationsspeicherschritt die Korrelation zwischen Oszillationsamplitudenänderungen und Oszillationsfrequenzänderungen, die für eine Vielzahl von Münzen gemessen worden sind, wobei sich die Leitfähigkeit innerhalb des Bereiches zulässiger Leitfähigkeiten für authentische Münzen verändert, in dem Korrelationsspeicherteil (40) gespeichert wird; und
im Metallobjekt-Identifizierungsschritt die Authentizität oder Nicht-Authentizität einer Münze auf der Grundlage der im Korrelationsspeicherteil gespeicherten Korrelation beurteilt wird.

## Revendications

1. Appareil (10) d'identification d'objets métalliques comprenant :
un circuit d'oscillation (20) comprenant une bobine (21) ;
une partie d'extraction (30) qui, lorsqu'un objet métallique à identifier se déplace par rapport à ladite bobine, extrait la sortie provenant dudit circuit d'oscillation comme étant au moins deux paramètres ;
**caractérisé en ce que** l'appareil comprend en outre :
une partie (40) de stockage de corrélation qui, sur la base des résultats mesurés pour une pluralité d'échantillons, stocke par avance une corrélation desdits paramètres pour l'objet métallique ; et
une partie (50) d'identification d'objets métalliques, qui identifie l'objet métallique en estimant si les paramètres extraits par ladite partie d'extraction sont applicables à la corrélation stockée dans ladite partie de stockage de corrélation.

2. Appareil (10) d'identification d'objets métalliques selon la revendication 1, **caractérisé en ce que** ladite partie (40) de stockage de corrélation stocke par avance les corrélations desdits paramètres pour une pluralité de types d'objets métalliques, et ladite partie (50) d'identification d'objets métalliques identifie le type d'objet métallique en estimant à quelle corrélation stockée dans ladite partie de stockage de corrélation les paramètres extraits par ladite partie (30) d'extraction sont applicables.

3. Appareil (10) d'identification d'objets métalliques selon la revendication 2, **caractérisé en ce que** les paramètres extraits par ladite partie d'extraction (30) sont un paramètre se rapportant au changement en termes d'amplitude d'oscillation et un paramètre se rapportant au changement en termes de fréquence d'oscillation ;
des corrélations pour chacun des objets métalliques entre le changement d'amplitude d'oscillation et le changement de fréquence d'oscillation sont stockées dans ladite partie (40) de stockage de corrélation ; et
ladite partie (50) d'identification d'objets métalliques identifie le type d'objet métallique en estimant à quelle corrélation stockée dans ladite partie de stockage de corrélation les paramètres extraits par ladite partie d'extraction sont applicables.

4. Appareil (10) d'identification d'objets métalliques selon la revendication 3, **caractérisé en ce que** ladite partie (40) de stockage de corrélation stocke des distributions du changement de fréquence d'oscillation par rapport au changement d'amplitude d'oscillation ; et
ladite partie (50) d'identification d'objets métalliques identifie le type d'objet métallique en estimant dans quelle distribution pour l'objet métallique stockée dans ladite partie de stockage de corrélation les paramètres extraits par ladite partie d'extraction sont inclus.

5. Appareil (10) d'identification d'objets métalliques selon la revendication 3, **caractérisé en ce que** ladite partie (40) de stockage de corrélation stocke des fonctions qui sont des approximations du changement de fréquence d'oscillation par rapport au changement d'amplitude d'oscillation pour chacun des objets métalliques, et ladite partie (50) d'identification d'objets métalliques identifie le type d'objet métallique en estimant la fonction pour l'objet métallique stockée dans ladite partie de stockage de corrélation au voisinage de laquelle les paramètres extraits par ladite partie d'extraction (30) se trouvent.

6. Appareil (10) d'identification d'objets métalliques selon la revendication 5, comprenant en outre un moyen (51) de calcul de paramètre de corrélation qui calcule le taux moyen d'augmentation de la fréquence d'oscillation par rapport à l'amplitude d'oscillation sur la base des fonctions stockées dans ladite partie (40) de stockage de corrélation, et calcule, comme paramètre de corrélation, la valeur de la fréquence d'oscillation au niveau d'une amplitude d'oscillation prescrite sur la base dudit taux moyen d'augmentation calculé et selon les paramètres extraits par ladite partie d'extraction (30) ;
où ladite partie d'identification d'objets métalliques estime la fonction pour l'objet métallique stockée dans ladite partie de stockage de corrélation au voisinage de laquelle les paramètres extraits par ladite partie d'extraction se trouvent, en estimant dans quelles valeurs seuils réglées par avance centrées sur les valeurs de fréquences d'oscillation à ladite amplitude d'oscillation prescrite pour chacune desdites fonctions le paramètre de corrélation calculé par ledit moyen de calcul de paramètre de corrélation est contenu.

7. Appareils (10) d'identification d'objets métalliques selon l'une des revendications 1 à 6, **caractérisés en ce que** lesdits objets métalliques sont des pièces de monnaie.

8. Appareil (10) d'identification d'objets métalliques selon la revendication 7, **caractérisé en ce que** ladite partie (40) de stockage de corrélation stocke une corrélation entre des changements en termes d'amplitude d'oscillation et des changements en termes de fréquence d'oscillation que l'on mesure pour une pluralité de pièces de monnaie en modifiant la conductivité dans la plage de conductivités admissibles pour des pièces de monnaie authentiques ; et
ladite partie d'identification d'objets métalliques estime l'authenticité ou la non authenticité d'une pièce de monnaie sur la base de la corrélation stockée dans ladite partie de stockage de corrélation.

9. Procédé d'identification d'objets métalliques, comprenant :
une étape d'extraction, dans laquelle, lorsqu'un objet métallique à identifier se déplace par rapport à une bobine (21) constituant une partie d'un circuit d'oscillation (20), la sortie provenant dudit circuit d'oscillation est extraite comme étant au moins deux paramètres ;
**caractérisé en ce que** le procédé comprend en outre une étape de stockage de corrélation, dans laquelle une corrélation entre des paramètres pour un objet métallique est stockée par avance dans une partie (40) de stockage de corrélation, sur la base de résultats mesurés pour une pluralité d'échantillons ; et
une étape d'identification d'objet métallique, dans laquelle l'objet métallique est identifié en estimant si les paramètres extraits dans ladite étape d'extraction sont applicables à la corrélation stockée dans ladite partie de stockage de corrélation.

10. Procédé d'identification d'objets métalliques selon la revendication 9, **caractérisé en ce que**, dans ladite étape de stockage de corrélation, des corrélations desdits paramètres sont stockées par avance pour une pluralité de types d'objets métalliques ; et, dans ladite étape d'identification d'objet métallique, le type d'objet métallique est identifié en estimant à quelle corrélation stockée dans ladite partie (40) de stockage de corrélation les paramètres extraits dans ladite étape d'extraction sont applicables.

11. Procédé d'identification d'objets métalliques selon la revendication 10, **caractérisé en ce que** les paramètres extraits dans ladite étape d'extraction sont un paramètre se rapportant au changement d'amplitude d'oscillation et un paramètre se rapportant au changement de fréquence d'oscillation ;
dans ladite étape de stockage de corrélation, des corrélations pour chacun des objets métalliques entre le changement d'amplitude d'oscillation et le changement de fréquence d'oscillation sont stockées dans ladite partie de stockage de corrélation ; et
dans ladite étape d'identification d'objet métallique, le type d'objet métallique est identifié en estimant à quelle corrélation stockée dans ladite partie de stockage de corrélation les paramètres extraits dans ladite étape d'extraction sont applicables.

12. Procédé d'identification d'objets métalliques selon la revendication 11, **caractérisé en ce que** :
dans ladite étape de stockage de corrélation, les distributions du changement de fréquence d'oscillation par rapport au changement d'amplitude d'oscillation sont stockées dans ladite partie de stockage de corrélation ; et
dans ladite étape d'identification d'objet métallique, le type d'objet métallique est identifié en estimant dans quelle distribution pour l'objet métallique stockée dans ladite partie (40) de stockage de corrélation les paramètres extraits dans ladite étape d'extraction sont inclus.

13. Procédé d'identification d'objets métalliques selon la revendication 11, **caractérisé en ce que** :
dans ladite étape de stockage de corrélation, des fonctions qui sont des approximations du changement de fréquence d'oscillation par rapport au changement d'amplitude d'oscillation pour chacun des objets métalliques sont stockées dans ladite partie (40) de stockage de corrélation ; et
dans ladite étape d'identification d'objet métallique, le type d'objet métallique est identifié en estimant la fonction pour l'objet métallique stockée dans ladite partie de stockage de corrélation au voisinage de laquelle les paramètres extraits dans ladite étape d'extraction se trouvent.

14. Procédé d'identification d'objets métalliques selon la revendication 13, comprenant en outre une étape de calcul de paramètre de corrélation dans laquelle le taux moyen d'augmentation de la fréquence d'oscillation par rapport à l'amplitude d'oscillation est calculé sur la base des fonctions stockées dans ladite partie (40) de stockage de corrélation, et la valeur de la fréquence d'oscillation à une amplitude d'oscillation prescrite est calculée, comme paramètre de corrélation, sur la base dudit taux moyen d'augmentation calculé et des paramètres extraits dans ladite étape d'extraction ; et **caractérisé en ce que** :
dans ladite étape d'identification d'objet métallique, on estime au voisinage de quelle fonction pour l'objet métallique stockée dans ladite partie de stockage de corrélation les paramètres extraits dans ladite étape d'extraction se trouvent, en estimant dans quelles valeurs seuils réglées par avance centrées sur les valeurs de fréquences d'oscillation à ladite amplitude d'oscillation prescrite pour chacune desdites fonctions le paramètre de corrélation calculé dans ladite étape de calcul de paramètre de corrélation est contenu.

15. Procédé d'identification d'objets métalliques selon l'une des revendications 9 à 14, **caractérisé en ce que** lesdits objets métalliques sont des pièces de monnaie.

16. Procédé d'identification d'objets métalliques selon la revendication 15, **caractérisé en ce que**, dans ladite étape de stockage de corrélation, la corrélation entre des changements d'amplitude d'oscillation et des changements de fréquence d'oscillation que l'on mesure pour une pluralité de pièces de monnaie en modifiant la conductivité dans la plage de conductivités admissibles pour des pièces de monnaie authentiques est stockée dans ladite partie (40) de stockage de corrélation ; et
dans ladite étape d'identification d'objet métallique, l'authenticité ou la non authenticité d'une pièce de monnaie est estimée sur la base de la corrélation stockée dans ladite partie de stockage de corrélation.
